# EUROPEAN PATENT SPECIFICATION

(11) **EP 4 253 910 B1**
(45) Date of publication and mention of the grant of the patent: **30.04.2025**
(21) Application number: 22165628.3
(22) Date of filing: 30.03.2022
(51) Int. Cl.: G01C 21/20, G01C 21/28, G01C 21/36

(54) **A METHOD FOR VALIDATING AN INITIAL POSITION FOR POSITIONING A VEHICLE**
VERFAHREN ZUR VALIDIERUNG EINER AUSGANGSPOSITION ZUR POSITIONIERUNG EINES FAHRZEUGS
PROCÉDÉ DE VALIDATION D'UNE POSITION INITIALE DE POSITIONNEMENT D'UN VÉHICULE

(43) Date of publication of application: 04.10.2023
(73) Proprietor: Volvo Autonomous Solutions AB, 405 08 Göteborg (SE)
(72) Inventor: BERGLIND, Niclas, 413 19 Göteborg (SE)
(74) Representative: Valea AB

(56) References cited:
- CN-A- 110 657 797

## Description

### TECHNICAL FIELD

The invention relates to a device and method for validating an initial position to be used for positioning a vehicle.

The invention will be described with respect to a general vehicle, e.g. a truck or a passenger car, but is also applicable any autonomous or semi-autonomous vehicle, or any other vehicle using a localization system for positioning a vehicle.

### BACKGROUND

Localization systems are used by vehicles, e.g., in particular by autonomous vehicles, to find a position when navigating an area e.g. with respect to a known map. A localization system typically uses sensors for scanning the surroundings of a vehicle, and then use the scan for deriving a new position of the vehicle. Sometimes communication with positioning satellites is also possible for triangulating a position of the vehicle. However, these options are not always available, especially when operating indoor and/or in mountainous areas.

When the vehicle has been shut down and need to start again, the localization system needs to be initialized with an initial position to start from. When no global positioning information, e.g. positioning information using Global Positioning System (GPS), is available, the initial position is typically not possible to derive from local sensor data. Therefore, a last known position of the vehicle needs to be stored when shutting down the localization system, and further used as the initial position when initializing and configuring the localization system.

Due to changes in the atmospheric ionosphere, cloud cover, and multi-path reflections of surrounding tall buildings, GPS positioning may sometimes differ in positioning data. Between shut down and start of a vehicle, a static GPS drift may be in the order of tens of meters, and up to hundreds of meters. CN110657797A, at least partially solves issues caused by such static GPS drift by using the last measured position as the actual position of the vehicle, as long as it can be detected that the vehicle remains at a standstill.

However, in some scenarios, the vehicle may need to be used by an operator for manual work when the localization system is shut down. For example, the operator moves the vehicle e.g. to another work area, for refueling, and/or for maintenance. Since the localization system is shut down, it cannot track the movement of the vehicle. To ensure that the vehicle can find its position properly, the operator thus needs to, before starting the localization system again, either place the vehicle in the exact same position with the same pose as where it previously stopped operating, or to manually configure a new current position and/or pose of the vehicle. However, the operator may forget to put in a new location, may write a slightly wrong location, and/or may accidentally position the vehicle at a wrong location, and hence, the vehicle may initialize and configure its localization system using a wrong initial position. This may lead to inaccurate positioning of the vehicle and/or a system failure of the vehicle.

Hence, there is an ongoing strive to achieve more robust, secure, and accurate positioning mechanisms for vehicles.

### SUMMARY

An object of the invention is to improve the security and accuracy for handling localization systems for a vehicle.

According to a first aspect, the above object is achieved by a method according to claim 1. Hence, there is provided a method for handling a localization system in a vehicle. The method comprises:
- When initializing the localization system, obtaining at least one current parameter, at least one stored parameter, and a reference position of the vehicle. The at least one current parameter is indicative of a current position state of the vehicle. The at least one stored parameter is indicative of a position state of the vehicle before a shutdown of the localization system. The reference position is a position of the vehicle before the shutdown of the localization system.
- Using the current position state and the stored position state of the vehicle, determining whether or not the vehicle has moved since the shutdown of the localization system.
- When determining that the vehicle has not moved since the shutdown of the localization system, configuring the localization system using the reference position.

In this way, the localization system can be safely configured with a correct reference position as it is ensured that the vehicle has not moved, and therefore the reference positions is valid and can be used for configuring the localization system. Since the position states are used for determining whether or not the vehicle has moved since the shutdown of the localization system, it is possible to determine when the reference position can be used for configuring the localization system and when it is needed to configure the localization system using a manual input.

When determining that the vehicle has moved since the shutdown of the localization system, refraining from configuring the localization system using the reference position. Since the vehicle has moved, it may pose a danger of using the reference position for configuring the localization system as the positioning information of the localization system may become inaccurate, or even faulty, thus causing dangers and/or system faults.

The at least one current parameter and at least one stored parameter respectively comprises any one or more out of:
- trip meter data,
- fuel and/or battery level,
- one or more identifiers of available and/or connected wireless networks,
- an articulation angle between the vehicle and an attached trailer,
- a roll and/or pitch angle of the vehicle, and
- steering wheel angle.

In some embodiments, the at least one current parameter and the at least one stored parameter comprises at least trip meter data, if trip meter data is available.

Optionally, determining whether or not the vehicle has moved since the shutdown of the localization system, comprises determining at least one difference between the at least one current parameter and the at least one stored parameter. When the at least one current parameter and the at least one stored parameter have at least one difference, it may be determined that the vehicle has moved since the shutdown of the localization system. Optionally, the vehicle is determined to have moved if the at least one difference is above at least one respective threshold.

Optionally, the vehicle is determined to have moved if the at least one difference is above 0.

According to the invention, configuring the localization system comprises:
- based on a map of an area comprising the reference position, determining expected area characteristics of the reference position,
- obtaining sensor data from a set of sensors, the sensor data being indicative of actual area characteristics of a current location of the vehicle,
- evaluating an accuracy of the reference position by comparing the expected area characteristics with the actual area characteristics, and
- when the evaluated accuracy of the reference position fulfils a quality constraint, configuring the localization system to provide positioning information based on the reference position.

According to a second aspect, there is provided a control unit to perform the method according to the first aspect. The control unit may be an electronic control unit. Advantages and effects of the control unit are largely analogous to the advantages and effects of the method. Further, all embodiments of the control unit are applicable to and combinable with all embodiments of the method, and vice versa.

According to a third aspect, there is provided a vehicle comprising the control unit according to the second aspect, and a localization system. Advantages and effects of the vehicle are largely analogous to the advantages and effects of the method. Further, all embodiments of the vehicle are applicable to and combinable with all embodiments of the method, and vice versa.

Optionally, the vehicle further comprises a set of sensors for scanning areas and/or for determining position states of the vehicle.

Optionally, the vehicle is autonomous or semi-autonomous.

According to a fourth aspect, there is provided a computer program comprising program code means for performing the method according to the first aspect, when said program is run on a computer. Advantages and effects of the computer program are largely analogous to the advantages and effects of the method. Further, all embodiments of the computer program are applicable to and combinable with all embodiments of the method, and vice versa.

According to a fifth aspect, there is provided a computer program medium carrying a computer program comprising program code means for performing the method according to the first aspect, when said program is run on a computer. Advantages and effects of the computer program medium are largely analogous to the advantages and effects of the method. Further, all embodiments of the computer program medium are applicable to and combinable with all embodiments of the method, and vice versa.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
- Fig. 1: is a schematic overview of a vehicle.
- Fig. 2: is a flowchart illustrating a method.
- Fig. 3a-3b: are illustrations of example scenarios.
- Fig. 4a-4b: are schematic block diagrams illustrating a control unit.

### DETAILED DESCRIPTION OF EXAMPLE EMBODIMENTS OF THE INVENTION

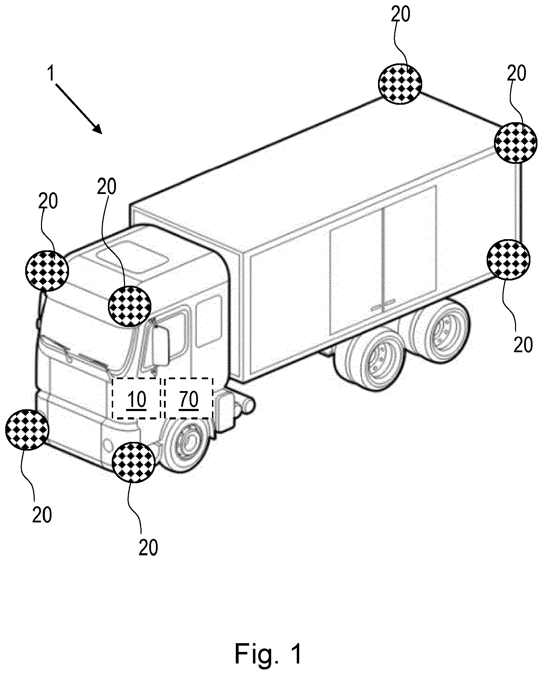

**Fig 1****.** is a schematic overview of a **vehicle 1.** The vehicle 1 may be any type of vehicle, e.g. car, truck, bus, heavy-duty vehicle, wheel loader, marine vessel etc. The vehicle 1 comprises a **localization system 10** which is arranged to obtain positioning information and/or locations of the vehicle 1. The vehicle 1 may in some embodiments be an autonomous or semi-autonomous vehicle which uses the localization system 10 for navigation. In other embodiments the vehicle 1 is a manually driven vehicle, locally or remote controlled, which uses the localization system 10 for navigation e.g. by guiding a user of the vehicle 10. The vehicle 1 may comprise a **set of sensors 20** mounted at any suitable location(s) of the vehicle 1. The set of sensors 20 comprise at least one sensor. The set of sensors 20 may comprise one or more different types of sensors for sensing the surrounding environment of the vehicle 1 and/or the position and/or pose of the vehicle 1. The pose of the vehicle 1 may comprise an orientation, e.g. in several directions. In some embodiments the pose of the vehicle 1 may also comprise the position of the vehicle 1. The set of sensors 20 may e.g. comprise one or more cameras, e.g. depth cameras, one or more Light Ranging and Detection (Lidar) sensors, e.g. two-dimensional (2D) Lidar(s) and/or three-dimensional (3D) Lidar(s), one or more Radio Detection and Ranging (Radar), and/or any other suitable sensor for sensing the surrounding environment of the vehicle 1 and/or the position and/or pose of the vehicle 1. Additionally or alternatively the set of sensors 20 may comprise one or more wireless devices, which in combination with radio access points in a wireless network, may obtain the position the vehicle 1 based on triangulation and radio signalling. The localization system 10 may use any sensor data obtained from the set of sensors 20 to derive and/or obtain needed positioning information for the vehicle 1. The set of sensors 20 may sense any position state relating to the vehicle 1. A position state herein means any value(s) of one or more parameters which, if changed, e.g. by a threshold, would indicate that the vehicle 1 has moved and/or has likely moved. For example, the one or more parameters may comprise any one or more out of trip meter data, fuel and/or battery level, roll and pitch angle of the vehicle 1. The vehicle 1 may operate in areas where GPS or other global positioning systems, e.g. Global Navigation Satellite Systems (GNSS), may not be accurate or is unavailable, such as in e.g. any one or more out of: mountainous areas, urban environments with surrounding tall buildings/trees/vegetation, mining environments, quarries, areas with lots of interference, and/or underground environments.

Embodiments herein may be performed by a **control unit 70.** The control unit 70 may be comprised in the vehicle 1 but may also be comprised in any other suitable location communicatively connected with the autonomous vehicle 1, in a remote cloud environment. The control unit 70 may be a distributed unit, e.g. with several different parts comprised at different respective locations, e.g. a first part in the vehicle 1 and a second part in the remote cloud environment. The control unit 70 may further comprise and/or be communicatively connected with the localization system 10.

Embodiment herein may relate to solving a task of initializing and configuring the localization system 10 with a correct initial position. Navigating the vehicle 1 using an incorrect initial position in the localization system 10, may lead to faults and/or errors. For some scenarios, the set of sensors 20 compare surroundings of the vehicle 1 with expected surroundings to estimate a certainty of a configured initial position. However, when surroundings of the vehicle 1 is similar in separate locations, e.g. in paths of underground environments, such estimations may indicate a high certainty of that the initial position is correct even when the configured location is incorrect. Thus it may be necessary to first ensure that the initial position is correct, or at least not likely to be incorrect.

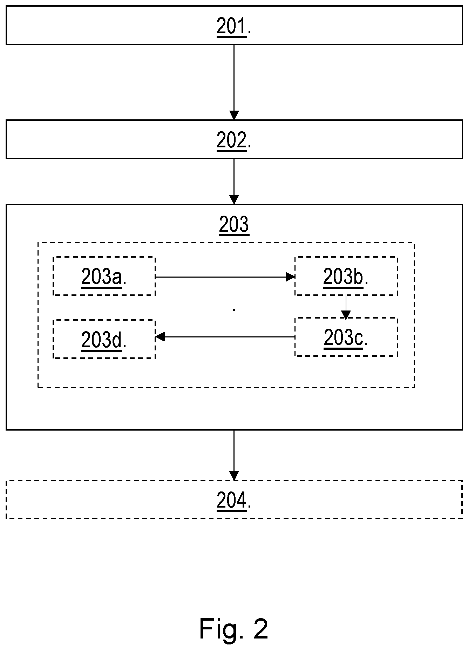

Fig. 2 illustrates a method performed by the control unit 70 for handling the localization system 10 in the vehicle 1. The method comprises the following actions described below, which actions may be taken in any suitable order. Optional actions are indicated by dashed boxes in Fig. 2.

### Action 201

The method comprises obtaining at least one current parameter, at least one stored parameter, and a reference position of the vehicle 1. This action is performed when initializing the localization system 10. The at least one current parameter is indicative of a current position state of the vehicle 1. The at least one stored parameter is indicative of a position state of the vehicle 1 before a shutdown of the localization system 10. The reference position is a position of the vehicle 1 before the shutdown of the localization system 10. The shutdown of the localization system 10 may have been performed at an earlier time, e.g. a previous day, and the localization system 10 may not have been in use since then.

The at least one current parameter and at least one stored parameter respectively comprises any one or more out of:
- trip meter data, e.g. a total distance travelled by the vehicle 1,
- fuel and/or battery level,
- one or more identifiers of available and/or connected wireless networks,
- an articulation angle between the vehicle 1 and an attached trailer,
- a roll and/or pitch angle of the vehicle 1, and
- steering wheel angle.

The at least one current parameter and the at least one stored parameter typically comprise the same types of parameters, at least one of the same type such that they may be compared to see if there has been a change since the shutdown of the localization system 10.

The current position state of the vehicle 1 and the position state of the vehicle 1 before the shutdown of the localization system 10 may be a state defined by their respective at least one current and stored parameters.

For example, the position states may comprise any one or more parameters that may indicate some positional feature of the vehicle 1, e.g. with some degree of certainty. In other words, any one or more parameters which typically does not change much when the vehicle 1 is standing still can be used for the position states.

In some embodiments, the reference position is a last valid position obtained by the localization system 10 before the shutdown of the localization system 10. The last valid position may have been obtained and stored when the vehicle 1 was in a stable stationary state and/or not moving. The reference position may comprise a location and/or a pose of the vehicle 1.

### Action 202

The method comprises determining whether or not the vehicle 1 has moved since the shutdown of the localization system 10. The action determines whether or not the vehicle 1 has moved by using the current position state and the stored position state of the vehicle 1. In other words, it may be determined based on the current and stored position state whether the vehicle 1 has moved or not.

In some embodiments, when there is a difference between the respective parameters of each position state, this indicates that the vehicle 1 has likely moved. Thus when there is/are difference(s), it may be determined that the vehicle 1 has moved. For example, if trip meter data differs between the respective at least one current and stored parameters, the vehicle 1 has undoubtedly travelled. If the fuel and/or battery levels has changed, an engine of the vehicle 1 has likely been used. If the one or more identifiers of available and/or connected wireless networks, has changed, the vehicle 1 has likely moved to a location which can access other wireless network. If the articulation angle between the vehicle 1 and an attached trailer has changed, this indicates that the vehicle 1 has likely moved as the angle cannot change easily otherwise. If the roll and/or pitch angles of the vehicle 1 has changed, this indicates angles of the road, i.e. if they have changed the vehicle 1, or the road, has moved to a new location, e.g. as it may suggest a move up or down a hill or other road slope. If the steering wheel angle has changed, this indicates that the vehicle 1 may have moved, e.g. maybe adjusting a parking location and/or pose of the vehicle 1 and/or moved further. Some parameters, e.g. steering wheel angle, wireless network access, etc, may have lower accuracy for determining whether or not the vehicle 1 has moved, and therefore these parameters may often be best used in combination with one or more other parameters.

In some embodiments, trip meter data is part of the at least one current parameter and the at least one stored parameter. In some of these embodiments, if the trip meter data has changed, this indicates that the vehicle 1 has moved since the shutdown of the localization system 10. In some embodiments, trip meter data is not available and one or more other parameters is instead part of the at least one current parameter and at least one stored parameter.

In some embodiments, determining whether or not the vehicle 1 has moved since the shutdown of the localization system 10, comprises determining at least one difference between the at least one current parameter and the at least one stored parameter. The at least one difference may be any suitable arithmetic comparison for difference. In some embodiments, if there is one difference in the at least one difference, it is determined that the vehicle 1 has moved. In some other embodiments, it may be necessary that the at least one difference indicates at least two differences for it to be determined that the vehicle 1 has moved, e.g. typically where one of the differing parameters is a low accuracy parameter such as steering wheel angle or wireless network connectivity. In some embodiments, two or more differences may be needed to determine that the vehicle 1 has moved, e.g. when using low confidence/accuracy parameters.

In some embodiments, the vehicle 1 is determined to have moved if the at least one difference is above at least one respective threshold. This is since some parameters may not be entirely stable, and there may be need for some margin of error. For example, the fuel level and/or battery level may change slightly due to temperature. In some embodiments it may be determined that the vehicle 1 has not moved, if the vehicle 1 has moved if it is a minimal distance, e.g. a few centimetres. The minimal distance may be predetermined and/or configurable e.g. to match an ability and/or errors of any localization algorithm.

In some embodiments, the vehicle 1 is determined to have moved if the at least one difference is above 0. In other words, for some embodiments, it may be most suitable to determined that any difference indicates that the vehicle 1 has moved. This may be particularly necessary for some embodiments, e.g. when the surroundings always look very similar and the paths are narrow, such as in underground mines. In these scenarios, slight differences when positioning of the vehicle 1 may have severe consequences such as not knowing when to turn and/or turning too late/early because of localization errors. These slight differences may appear since when the initial position is incorrect, and hence it is needed to limit the difference.

### Action 203

The method comprises configuring the localization system 10 using the reference position. This action is performed when determining that the vehicle 1 has not moved since the shutdown of the localization system 10.

Configuring the localization system 10 may involve any configuration necessary for completing the initialization of the localization system 10 e.g. such that it can be used for finding the position of the vehicle 1. Actions 203a-203d will be explained as one of the options for configuring the localization system 10.

### Action 203a

The method may further comprise, based on a map of an area comprising the reference position, determining expected area characteristics of the reference position. In other words, the map may indicate how the surrounding area of the vehicle 1 should look like if the vehicle 1 is located in the reference position. This may comprise distances to obstacles, walls, etc.

### Action 203b

The method may further comprise obtaining sensor data from a set of sensors 20. The sensor data being indicative of actual area characteristics of a current location of the vehicle 1. In other words, measuring the surroundings of the vehicle 1 using sensors to see if it matches the map.

### Action 203c

The method may further comprise evaluating an accuracy of the reference position by comparing the expected area characteristics with the actual area characteristics. This technique is often referred to as "*map matching*" and/or "*scan matching*"*.* The reference position may in this technique be slightly updated in position and/or pose to best match the expected area characteristics. Comparing the expected area characteristics with the actual area characteristics may comprise variance and distance calculation of mapping the map to current sensor data. In some embodiments this may additionally or alternatively comprise mapping the reference position to a position of the map.

### Action 203d

The method may further comprise, configuring 203d the localization system 10 to provide positioning information based on the reference position. This may be performed when the evaluated accuracy of the reference position fulfils a quality constraint, e.g. it is determined that the reference position matches the map, e.g. with some minor adjustments.

### Action 204

The method may further comprise, refraining from configuring the localization system 10 using the reference position. This action may be performed when determining that the vehicle 1 has moved since the shutdown of the localization system 10. This may be when the at least one difference between the at least one current parameter and the at least one stored parameter too large, e.g. they are not equivalent. For some parameters, this action may need to be performed even for very small changes in the position state of the vehicle 1, e.g. if the trip meter data of the at least one current parameter and the at least one stored parameter does not correspond to the same distance driven.

The method may further comprise obtaining and storing the at least one stored parameter and the reference position, e.g. before the shutdown of the localization system 10. This may be performed when the vehicle 1 is in a stable stationary state and/or not moving.

The methods and actions will now be further explained and exemplified in below embodiments. These below embodiments may be combined with any suitable embodiment as described above.

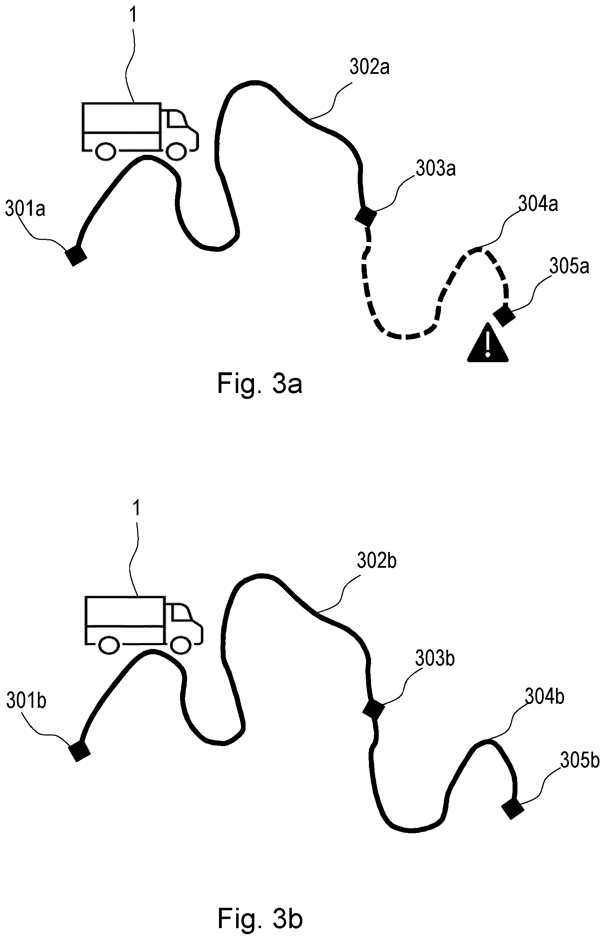

**Fig. 3a** illustrates an example scenario wherein the vehicle 1 moves when the localization system 1 is shutdown. The vehicle 1 may start at a **start position 301a** and drive using and/or being assisted by the localization system 10 via a **path 302a** to a **stop position 303a.** A position of the vehicle 1 is obtained and stored as a reference position together with a trip meter data. When the localization system is shutdown, an operator needs to move the vehicle 1 as it is in the way for another vehicle, and moves the vehicle 1 from the stop position 303a to an **end position 305a** via a **path 304a.** When the vehicle 1 needs to use the localization system 10 again, the localization system 10 is initialized and the stored trip meter data is obtained and compared against the current trip meter data. As the vehicle 1 has moved, the current trip meter data is different from the stored trip meter data and hence, it is determined that the vehicle 1 has moved during the localization system 10 shutdown. As the vehicle 1 has moved, the localization system 10 need to be configured with a manual position, e.g. given by the operator.

**Fig. 3b** illustrates an example scenario wherein the vehicle 1 does not move when the localization system 1 is shutdown. The vehicle 1 may start at a **start position 301b** and drive using and/or being assisted by the localization system 10 via a **path 302b** to a **stop position 303b.** A position of the vehicle 1 is obtained and stored as a reference position together with a trip meter data. When the vehicle 1 needs to use the localization system 10 again, the localization system 10 is initialized and the stored trip meter data is obtained and compared against the current trip meter data. As the vehicle 1 has not moved, the current trip meter data is equivalent to the stored trip meter data and hence, it is determined that the vehicle 1 has not moved during the localization system 10 shutdown. As the vehicle 1 has not moved, the localization system 10 may be configured with the refence position, e.g. as in action 203a-203d. The vehicle 1 may then proceed with driving using and/or being assisted by the localization system 10 from the stop position 303b, via a **path 304b** to an **end position 305b.**

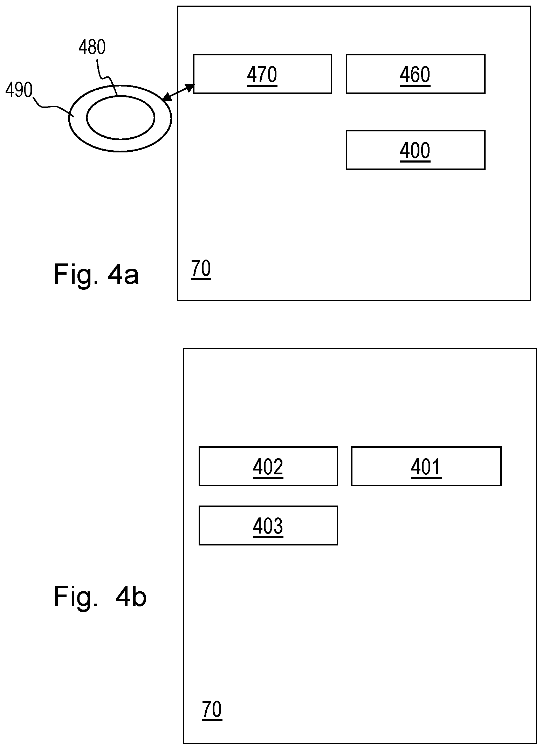

To perform the method actions described herein, the control unit 70 may be configured to perform any one or more of the above actions 201-204 or any of the other examples or embodiments herein. The control unit 70 may for example comprise an arrangement depicted in **Figs. 4a** and **4b****.**

The control unit 70 may comprise an **input and output interface 400** configured to communicate with any necessary components and/or entities of embodiments herein. The input and output interface 400 may comprise a wireless and/or wired receiver (not shown) and a wireless and/or wired transmitter (not shown). The control unit 70 may be arranged in any suitable location of the vehicle 1. The control unit 70 may use the input and output interface 400 to control and communicate with sensors, actuators, subsystems, and interfaces in the vehicle 1 by using any one or more out of: Controller Area Network (CAN), ethernet cables, Wi-Fi, Bluetooth, and/or other network interfaces.

The control unit 70 may be configured to, e.g. by means of an **obtaining unit 401** in the control unit 70, when initializing the localization system 10, obtain at least one current parameter, at least one stored parameter, and a reference position of the vehicle 1. The at least one current parameter is indicative of a current position state of the vehicle 1. The at least one stored parameter is indicative of a position state of the vehicle 1 before a shutdown of the localization system 10. The reference position is a position of the vehicle 1 before the shutdown of the localization system 10.

The control unit 70 may be configured to, e.g. by means of a **determining unit 402** in the control unit 70, when initializing the localization system 10, using the current position state and the stored position state of the vehicle 1, determine whether or not the vehicle 1 has moved since the shutdown of the localization system 10.

The control unit 70 may be configured to, e.g. by means of a **configuring unit 403** in the control unit 70, when determining that the vehicle 1 has not moved since the shutdown of the localization system 10, configure the localization system 10 using the reference position.

The embodiments herein may be implemented through a processor or one or more processors, such as the **processor 460** of a processing circuitry in the control unit 70 depicted in Fig. 4a, together with computer program code for performing the functions and actions of the embodiments herein. The program code mentioned above may also be provided as a computer program medium, for instance in the form of a data computer readable medium carrying computer program code for performing the embodiments herein when being loaded into the control unit 70. One such computer readable medium may be in the form of a memory stick. The computer program code may furthermore be provided as pure program code on a server and downloaded to the control unit 70.

The control unit 70 may further comprise a **memory 470** comprising one or more memory units. The memory 470 comprises instructions executable by the processor in control unit 70. The memory 470 is arranged to be used to store e.g. information, indications, data, configurations, sensor data, positioning information, scanned surroundings of the vehicle 1, and applications to perform the methods herein when being executed in the control unit 70.

In some embodiments, a **computer program 480** comprises instructions, which when executed by a computer, e.g. the at least one processor 460, cause the at least one processor of the control unit 70 to perform the actions 201-204 above.

In some embodiments, a **computer-readable storage medium 490** comprises the respective computer program 480. The computer-readable storage medium 490 may comprise program code for performing the steps of any one of actions 201-204 above when said program product is run on a computer, e.g. the at least one processor 460.

Those skilled in the art will appreciate that the units in the control unit 70 described above may refer to a combination of analogue and digital circuits, and/or one or more processors configured with software and/or firmware, e.g. stored in the control unit 70, that when executed by the respective one or more processors such as the processors described above. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip (SoC).

It is to be understood that the present invention is not limited to the embodiments described above and illustrated in the drawings; rather, the skilled person will recognize that many changes and modifications may be made within the scope of the appended claims.

## Claims

1. A method for handling a localization system (10) in a vehicle (1), the method comprising:
- when initializing the localization system (10), obtaining (201) at least one current parameter, at least one stored parameter, and a reference position of the vehicle (1), wherein the at least one current parameter is indicative of a current position state of the vehicle (1), wherein the at least one stored parameter is indicative of a position state of the vehicle (1) before a shutdown of the localization system (10), and wherein the reference position is a position of the vehicle (1) before the shutdown of the localization system (10), and wherein the at least one current parameter and at least one stored parameter respectively comprises any one or more out of: trip meter data, a fuel and/or battery level, one or more identifiers of available and/or connected wireless networks, an articulation angle between the vehicle (1) and an attached trailer, a roll and/or pitch angle of the vehicle (1), and a steering wheel angle;
- using the current position state and the stored position state of the vehicle (1), determining (202) whether or not the vehicle (1) has moved since the shutdown of the localization system (10);
- when determining that the vehicle (1) has moved since the shutdown of the localization system (10), refraining (204) from configuring the localization system (10) using the reference position;
- when determining that the vehicle (1) has not moved since the shutdown of the localization system (10), configuring (203) the localization system (10) using the reference position;
the method being **characterized in that** configuring (203) the localization system (10) comprises:
- based on a map of an area comprising the reference position, determining (203a) expected area characteristics of the reference position,
- obtaining (203b) sensor data from a set of sensors (20), the sensor data being indicative of actual area characteristics of a current location of the vehicle (1),
- evaluating (203c) an accuracy of the reference position by comparing the expected area characteristics with the actual area characteristics, and
- when the evaluated accuracy of the reference position fulfils a quality constraint, configuring (203d) the localization system (10) to provide positioning information based on the reference position.

2. The method according to any one of the preceding claims, wherein determining (202) whether or not the vehicle (1) has moved since the shutdown of the localization system (10), comprises determining at least one difference between the at least one current parameter and the at least one stored parameter.

3. The method according to claim 2, wherein the vehicle (1) is determined to have moved if the at least one difference is above at least one respective threshold.

4. The method according to any one of claims 2-3, wherein the vehicle (1) is determined to have moved if the at least one difference is above 0.

5. A control unit (70) **characterized by** being configured to perform the method according to any one of claims 1-4.

6. A vehicle (1) **characterized by** comprising the control unit (70) according to claim 5, and a localization system (10).

7. The vehicle (1) according to claim 6, further comprising a set of sensors (20) for scanning areas and/or for determining position states of the vehicle (1).

8. The vehicle (1) according to any of claims 6 or 7 wherein the vehicle (1) is autonomous or semi-autonomous.

9. A computer program (480) **characterized by** comprising program code means for performing the steps of any one of claims 1-4 when said program is run on a computer.

10. A computer program medium (490) **characterized by** carrying a computer program comprising program code means for performing the steps of any one of claims 1-4 when said program is run on a computer.

## Patentansprüche

1. Verfahren zum Gebrauch eines Lokalisierungssystems (10) in einem Fahrzeug (1), wobei das Verfahren Folgendes umfasst:
- bei Initialisieren des Lokalisierungssystems (10) Erhalten (201) von mindestens einem aktuellen Parameter, mindestens einem gespeicherten Parameter und einer Referenzposition des Fahrzeugs (1), wobei der mindestens eine aktuelle Parameter anzeigend ist für einen aktuellen Positionsstatus des Fahrzeugs (1), wobei der mindestens eine gespeicherte Parameter anzeigend ist für einen Positionsstatus des Fahrzeugs (1) vor einer Abschaltung des Lokalisierungssystems (10), und wobei die Referenzposition eine Position des Fahrzeugs (1) vor der Abschaltung des Lokalisierungssystems (10) ist, und wobei der mindestens eine aktuelle Parameter und der mindestens eine gespeicherte Parameter jeweils eines oder mehreres umfassen von: Tageskilometerdaten, einem Kraftstoff- und/oder Batteriestand, einer oder mehreren Kennungen von verfügbaren und/oder verbundenen drahtlosen Netzwerken, einem Knickwinkel zwischen dem Fahrzeug (1) und einem angebrachten Anhänger, einem Neigungs- und/oder Steigungswinkel des Fahrzeugs (1) und einem Lenkradwinkel;
- Verwenden des aktuellen Positionsstatus und des gespeicherten Positionsstatus des Fahrzeugs (1), Bestimmen (202), ob das Fahrzeug (1) seit der Abschaltung des Lokalisierungssystems (10) bewegt wurde oder nicht;
- wenn bestimmt wird, dass das Fahrzeug (1) seit der Abschaltung des Lokalisierungssystems (10) bewegt wurde, Unterlassen (204) von Konfigurieren des Lokalisierungssystems (10) unter Verwendung der Referenzposition;
- wenn bestimmt wird, dass das Fahrzeug (1) seit der Abschaltung des Lokalisierungssystems (10) nicht bewegt wurde, Konfigurieren (203) des Lokalisierungssystems (10) unter Verwendung der Referenzposition;
wobei das Verfahren **dadurch gekennzeichnet ist, dass** Konfigurieren (203) des Lokalisierungssystems (10) Folgendes umfasst:
- basierend auf einer Karte eines Bereichs, der die Referenzposition umfasst, Bestimmen (203a) von erwarteten Bereichsmerkmalen der Referenzposition,
- Erhalten (203b) von Sensordaten von einem Satz von Sensoren (20), wobei die Sensordaten anzeigend sind für tatsächlichen Bereichsmerkmale eines aktuellen Standorts des Fahrzeugs (1), Beurteilen (203c) einer Genauigkeit der Referenzposition durch Vergleichen der erwarteten Bereichsmerkmale mit den tatsächlichen Bereichsmerkmalen, und
- wenn die beurteilte Genauigkeit der Referenzposition eine Qualitätsbeschränkung erfüllt, Konfigurieren (203d) des Lokalisierungssystems (10), um basierend auf der Referenzposition Positionierungsinformationen bereitzustellen.

2. Verfahren nach einem der vorstehenden Ansprüche, wobei Bestimmen (202), ob das Fahrzeug (1) seit der Abschaltung des Lokalisierungssystems (10) bewegt wurde, Bestimmen von mindestens einem Unterschied zwischen dem mindestens einen aktuellen Parameter und dem mindestens einen gespeicherten Parameter umfasst.

3. Verfahren nach Anspruch 2, wobei bestimmt wird, dass das Fahrzeug (1) bewegt wurde, wenn der mindestens eine Unterschied über mindestens einem jeweiligen Schwellenwert liegt.

4. Verfahren nach einem der Ansprüche 2-3, wobei bestimmt wird, dass das Fahrzeug (1) bewegt wurde, wenn der mindestens eine Unterschied über 0 liegt.

5. Steuereinheit (70), die **dadurch gekennzeichnet ist, dass** sie konfiguriert ist, um das Verfahren nach einem der Ansprüche 1-4 durchzuführen.

6. Fahrzeug (1), das **dadurch gekennzeichnet ist, dass** es die Steuereinheit (70) nach Anspruch 5 und ein Lokalisierungssystem (10) umfasst.

7. Fahrzeug (1) nach Anspruch 6, weiter umfassend einen Satz von Sensoren (20) zum Abtasten von Bereichen und/oder zum Bestimmen von Positionsstatus des Fahrzeugs (1).

8. Fahrzeug (1) nach einem der Ansprüche 6 oder 7 wobei das Fahrzeug (1) selbstfahrend oder halb-selbstfahrend ist.

9. Computerprogramm (480), **gekennzeichnet durch** Umfassen von Programmcodemittel zum Durchführen der Schritte von einem der Ansprüche 1-4, wenn das Programm auf einem Computer läuft.

10. Computerprogrammmittel (490), **gekennzeichnet durch** Tragen eines Computerprogramms, das Programmcodemittel zum Durchführen der Schritte von einem der Ansprüche 1-4 umfasst, wenn das Programm auf einem Computer läuft.

## Revendications

1. Procédé de gestion d'un système de localisation (10) dans un véhicule (1), le procédé comprenant :
- lors de l'initialisation du système de localisation (10), obtenir (201) au moins un paramètre actuel, au moins un paramètre stocké, et une position de référence du véhicule (1), dans lequel le au moins un paramètre actuel est indicatif d'un état de position actuel du véhicule (1), dans lequel le au moins un paramètre stocké est indicatif d'un état de position du véhicule (1) avant un arrêt du système de localisation (10), et dans lequel la position de référence est une position du véhicule (1) avant l'arrêt du système de localisation (10), et dans lequel le au moins un paramètre actuel et au moins un paramètre stocké comprennent respectivement un quelconque ou plusieurs quelconques de : données de compteur kilométrique, niveau de carburant et/ou de batterie, un ou plusieurs identifiants de réseaux sans fil disponibles et/ou connectés, angle d'articulation entre le véhicule (1) et une remorque attachée, angle de roulis et/ou de tangage du véhicule (1), et angle de braquage de volant ;
- en utilisant l'état de position actuel et l'état de position stocké du véhicule (1), déterminer (202) si le véhicule (1) s'est ou non déplacé depuis l'arrêt du système de localisation (10) ;
- lors de la détermination du fait que le véhicule (1) s'est déplacé depuis l'arrêt du système de localisation (10), s'abstenir (204) de configurer le système de localisation (10) en utilisant la position de référence ;
- lors de la détermination du fait que le véhicule (1) ne s'est pas déplacé depuis l'arrêt du système de localisation (10), configurer (203) le système de localisation (10) en utilisant la position de référence ;
le procédé étant **caractérisé en ce que** la configuration (203) du système de localisation (10) comprend :
- sur la base d'une carte d'une zone comprenant la position de référence, déterminer (203a) des caractéristiques de zone attendues de la position de référence,
- obtenir (203b) des données de capteur provenant d'un ensemble de capteurs (20), les données de capteur étant indicatives de caractéristiques de zone effectives d'un emplacement actuel du véhicule (1),
- évaluer (203c) une précision de la position de référence en comparant les caractéristiques de zone attendues avec les caractéristiques de zone effectives, et
- lorsque la précision évaluée de la position de référence remplit une contrainte de qualité, configurer (203d) le système de localisation (10) pour fournir des informations de positionnement sur la base de la position de référence.

2. Procédé selon l'une quelconque des revendications précédentes, dans lequel la détermination (202) de savoir si le véhicule (1) s'est ou non déplacé depuis l'arrêt du système de localisation (10) comprend la détermination au moins d'une différence entre le au moins un paramètre actuel et le au moins un paramètre stocké.

3. Procédé selon la revendication 2, dans lequel il est déterminé que le véhicule (1) s'est déplacé si la au moins une différence est supérieure à au moins un seuil respectif.

4. Procédé selon l'une quelconque des revendications 2 et 3, dans lequel il est déterminé que le véhicule (1) s'est déplacé si la au moins une différence est supérieure à 0.

5. Unité de commande (70) **caractérisée en ce qu'**elle est configurée pour réaliser le procédé selon l'une quelconque des revendications 1 à 4.

6. Véhicule (1) **caractérisé en ce qu'**il comprend l'unité de commande (70) selon la revendication 5, et un système de localisation (10).

7. Véhicule (1) selon la revendication 6, comprenant en outre un ensemble de capteurs (20) pour balayer des zones et/ou déterminer des états de position du véhicule (1).

8. Véhicule (1) selon l'une quelconque des revendications 6 ou 7 dans lequel le véhicule (1) est autonome ou semi-autonome.

9. Programme d'ordinateur (480) **caractérisé en ce qu'**il comprend un moyen de code de programme pour réaliser les étapes selon l'une quelconque des revendications 1 à 4 lorsque ledit programme est exécuté sur un ordinateur.

10. Support de programme d'ordinateur (490) **caractérisé en ce qu'**il contient un programme d'ordinateur comprenant un moyen de code de programme pour réaliser les étapes selon l'une quelconque des revendications 1 à 4 lorsque ledit programme est exécuté sur un ordinateur.
